Europäisches Patentamt

(19) European Patent Office

Office européen des brevets

(11) Publication number: **0 160 398**
**A2**

## (12) EUROPEAN PATENT APPLICATION

(21) Application number: **85302172.3**

(22) Date of filing: **28.03.85**

(51) Int. Cl.⁴: **H 04 N 9/89**

(30) Priority: **28.03.84 JP 61456/84**
**06.04.84 JP 69380/84**

(43) Date of publication of application:
**06.11.85 Bulletin 85/45**

(84) Designated Contracting States:
**DE FR GB**

(71) Applicant: **Matsushita Electric Industrial Co., Ltd.**
**1006, Oaza Kadoma**
**Kadoma-shi Osaka-fu, 571(JP)**

(72) Inventor: **Yamanishi, Kazuhiro**
**3-121, Arakawa**
**Higashiosaka-shi Osaka-fu 577(JP)**

(72) Inventor: **Kobayashi, Masaaki**
**1-224, Nishitada Higashitouge**
**Kawanishi-shi Hyogo-ken, 666-01(JP)**

(74) Representative: **Crawford, Andrew Birkby et al,**
**A.A. THORNTON & CO. Northumberland House 303-306**
**High Holborn**
**London WC1V 7LE(GB)**

(54) Signal processing apparatus.

(57) Apparatus for recording or transmitting television signals in component form with the components time-shared and multiplexed, comprises first and second phase control loops (1, 2) to which synchronous signals separated from an input signal are fed, and a plurality of memory devices (31, 32, 33), wherein the output of the first phase control loop (1) is used as a writing clock signal for writing the input signal into the memory devices (31, 32, 33), and the output of the second phase control loop (2) is used as a reading clock signal for reading the contents of said memory devices (31, 32, 33). The writing clock signal is applied to each of the plurality of memory devices (31, 32, 33) in turn in synchronisation with the synchronous signal of the input signal, and the reading clock signal is applied to each of the plurality of memory devices (31, 32, 33) which is not applied with the writing clock signal in turn in synchronisation with the synchronous signal of the output signal. While each of the memory devices (31, 32, 33) repeats writing and reading operations alternately, the reading timing of the memory devices are not synchronised with the writing timings of the memory devices. Accordingly, the fluctuation of the input synchronous signal will not appear in the output signal.

./...

FIG.4

Signal processing apparatus.

This invention relates to a signal processing apparatus usable in video tape recorders and television broadcast transmission apparatuses.

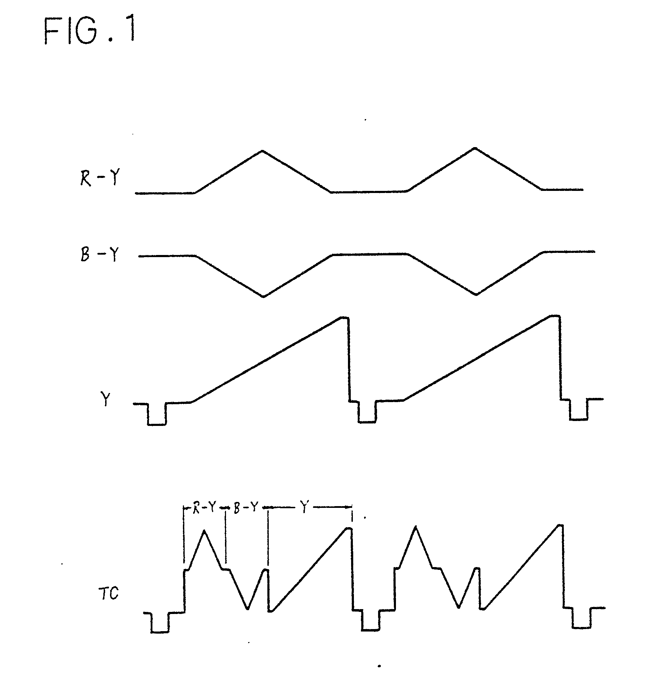

Recently it has been attempted to improve the picture quality by transmitting, or recording and reproducing three component signals, that is, brightness signal (Y) and color difference signals (R-Y, B-Y), instead of compound video signals, by time-sharing and multiplexing them. For instance, as shown in Fig. 1, signals R-Y, B-Y, and Y are individually time-compressed and arranged time-divisionally to be converted into time-divisional complex signals TC (hereinafter called TC signals), and are transmitted or recorded or reproduced, and they are time-expanded to obtain the three video signals.

As a means of such signal processing, a Timeplex system for 8 mm VTR proposed by Thomson-Brandt Co. is known. Certain conventional examples of time compressing and expanding circuit are disclosed in Japanese patent application 56-43318.

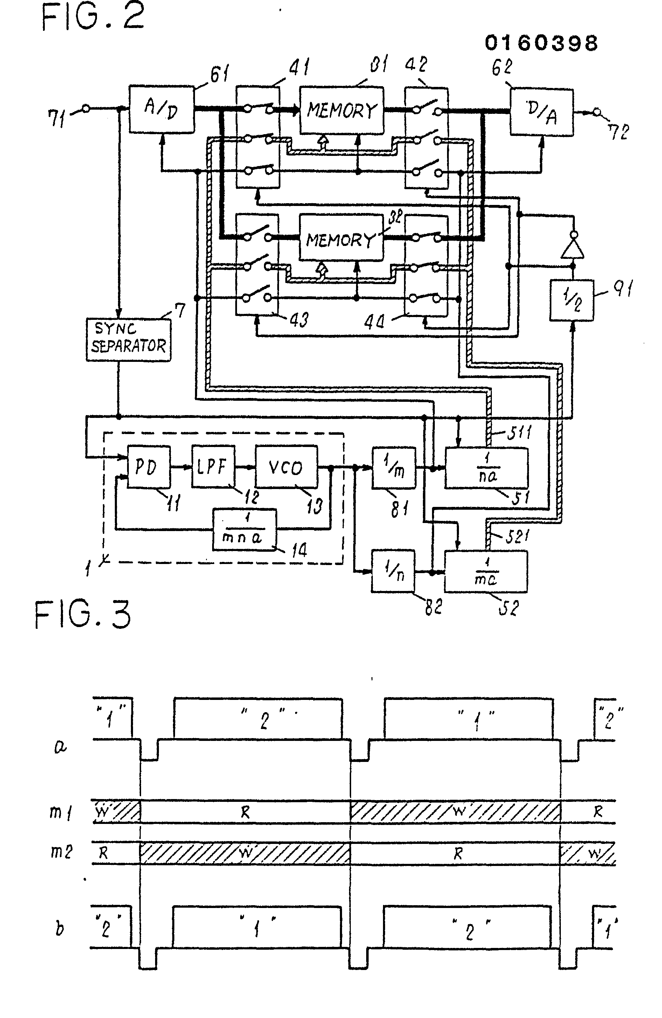

The conventional signal processing apparatus will be described below by referring to the accompanying drawings. Fig. 2 is a circuit configuration of the signal processing apparatus for converting R-Y, B-Y, and Y signals into the TC signals or reversely converting the TC signals back into R-Y, B-Y, Y signals. In the case of former process, the input side comprises three systems, and the signals are written in parallel with respect to the time into the memory unit, and are outputted in series. In the latter process, the output comprises three systems, and the signals are written in series with respect to the time into the memory, and are outputted in parallel. Therefore, since the structure is the same in both cases as shown in Fig. 2, the reverse conversion from TC signals is explained below. In Fig. 2, numeral 71 is an input terminal and 72 is an output terminal.

The input TC signal picks up only the synchronizing signal at a synchronous separating unit 7, and it is applied to a phase control loop 1 and multiplied. When the sample lock frequencies of Y signal and TC signal are respectively $m \cdot a \cdot f_H$ and $n \cdot a \cdot f_H$ (where $f_H$ is the frequency of synchronous signal, $m/n$ is the time compression ratio, $m \cdot a$, $n \cdot a$ are the number of samples between synchronous signals), the dividing ratio of frequency divider 14 is set to $1/(m \cdot n \cdot a)$ so that the output frequency of the voltage control oscillator (VCO) of the phase control loop may be a common multiple of $m \cdot n \cdot a \cdot f_H$. Therefore, the phase control loop 1 compares the synchronous signal and the output of frequency divider 14 in phase, and the output of the phase detector (PD) 11, that is, the phase difference voltage, is applied to the VCO 13 by way of low pass filter (LPF) 12 to make up a phase control loop, thereby operating to make zero the phase difference between the synchronous signal and output of $1/(m \cdot n \cdot a)$ frequency divider 14. As a result, the output frequency of VCO 13 becomes $m \cdot n \cdot a \cdot f_H$. This output is applied to $1/m$ frequency divider 81, and a sample clock frequency $n \cdot a \cdot f_H$ of the TC signal is obtained, and it is applied to $1/(n \cdot a)$ counter for writing in (write counter) 51 to generate a writing address 511 to first memory unit 31 and second memory unit 32.

On the other hand, the output of VCO 13 is applied also to a 1/2 frequency divider 82, and similarly 1/(m·a) counter for reading out (read counter) 52 generates a reading address 521 of Y signal. The write counter 51 and read counter 52 are reset by synchronous signal.

Meanwhile, the input TC signal is converted into a digital signal at sampling clock frequency of $n \cdot a \cdot f_H$ by an A/D (analog/digital) converter 61, and is fed to the first memory unit 31 or second memory unit 32. The input, output, each address and clock signal of these memory units are effected by changeover switches 41, 42, 43, 44, which are further connected to the output of 1/2 frequency divider 91, and since a synchronous signal is applied to the 1/2 frequency divider 91, they are changed over at every synchronous signal. This operation is further described in Fig. 3. In this diagram, curve a is a TC signal, and the attached numerals (1, 2) refer to the memory units in which the signal is written. Also, m1 and m2 refer to the write (W) and read (R) state of the first and second memory units, and curve b is an R-Y, B-Y or Y signal, and the attached numerals (1, 2) refer to the memory units in which the signal is written.

While the changeover switches 41, 42, 43, 44 are in the state as shown in Fig. 2, the A/D converted TC signal is written into the first memory unit 31, while the second memory unit 32 is read out. These actions are alternately exchanged at every synchronous signal, and the timing chart as shown in Fig. 3 is obtained.

The A/D converter 61 and writing are operated at the clock frequency of $n \cdot a \cdot f_H$, and the signals are sequentially written serially into the memories in each memory unit, while the D/A (digital/analog) converter 62 and reading are operated at the clock frequency of $m \cdot a \cdot f_H$, and the signals are sequentially read out parallel from the memories of each memory unit, so that output signals of R-Y, B-Y and Y are obtained.

Thus, in the conventional signal processing apparatus, since the writing and reading operations of the memory devices were changed over simultaneously at every synchronous signal, when a signal containing jitter having a relatively high frequency component among the time axis errors or drift having a relatively low frequency component, such as reproduction signal of video tape recorder, was fed, the jitter or drift appeared directly in the output signal. The
jitter component is particularly troublesome because the
boundary line of the picture is made rugged to deteriorate
the picture quality.


Summary of the invention

It is a primary object of this invention to provide a
signal processing apparatus in which the jitter component of
the input side does not appear at the output side.

The signal processing apparatus of this invention comprises first and second phase control loops to which synchronous signals separated from an input signal are fed,
and a plurality of memory devices, wherein the output of the
first phase control loop is used as a writing clock signal
for writing the input signal into the memory devices, and the
output of the second phase control loop is used as reading
clock signal for reading the output signal from said memory
devices. The writing clock signal is applied to each of the
plurality of memory devices in turn in synchronization with
the synchronous signal of the input signal, and the reading
clock signal is applied to each of the plurality of memory
devices which is not applied with the writing clock signal in turn in synchronization with the synchronous signal 0160398 the output signal. While each of the memory devices repeats writing and reading operations alternately, the reading timing of the memory devices are not synchrozed with the writing timings of the memory devices. Accordingly, the fluctuation of the input synchronous signal will not appear in the output signal.

Preferably, the cutoff frequency of LPF of said first phase control loop is set higher than that of the second phase control loop to accelerate the response speed, thereby allowing the output of the first phase control loop to follow the jitter of the input signal but not allowing the output of the second phase control loop to follow the jitter.

Furthermore, a synchronous signal adding part is provided at the output side of the memory devices, and a signal is written into said memory device only in a specified time interval shorter than the period of synchronous signal, while the output signal is read out from the memory device in a specified time interval shorter than the period of synchronous signal, so that the allowance of jitter width may be expanded, thus making it possible to make up only with two sets of memory device.

The above and other objects and features of the invention will be apparent from the following description taken in connection with the accompanying drawings in which:


Brief description of the drawings

Fig. 1 is a time-divisional multiplexed signal waveform diagrams      of R-Y, B-Y, Y signals;

Fig. 2 is a block diagram of a conventional signal processing apparatus;

Fig. 3 is a timing chart of the Fig. 2 apparatus;

Fig. 4 is a block diagram ·  of  an      embodiment  of the present invention;

Fig. 5 and Fig. 6 are timing charts of  the Fig. 4 embodiment;

Fig. 7 is a  block diagram    of  another    embodiment of the present invention;

Fig. 8 and Fig. 9 are timing charts of the Fig. 7 embodiment;

Fig. 10 is a  block  diagram    of a further embodiment of  the present invention;

Fig. 11 and Fig. 12 are timing charts of the  Fig. 10 embodiment;

Fig. 13 is a block diagram of an embodiment of the timing control unit; and

Fig. 14 is a block diagram of an embodiment of the synchronous signal adding unit.

Description of the preferred embodiments

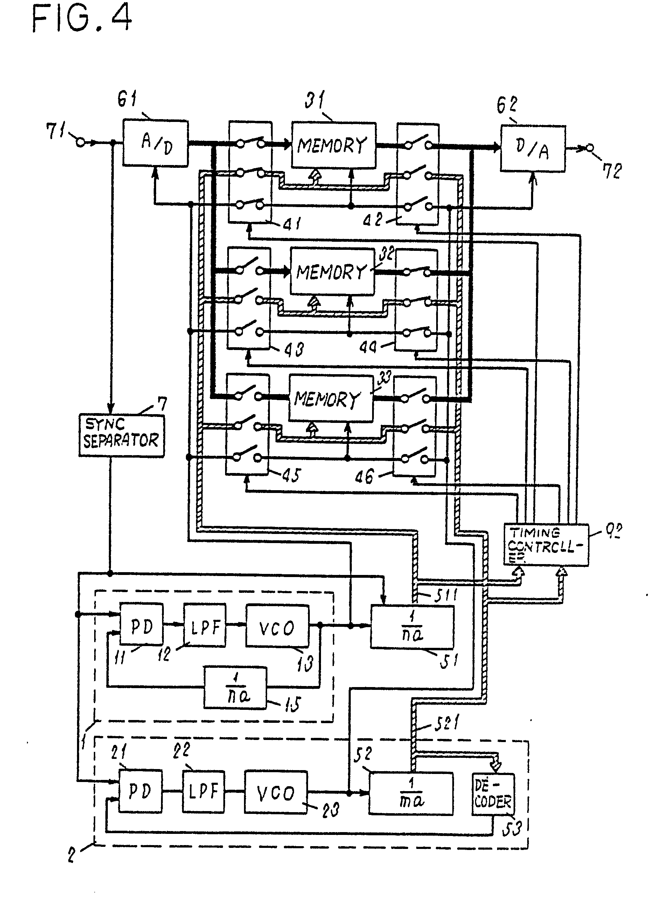

Fig. 4 is a block diagram of one of the embodiments of this invention, in which the parts corresponding to the constituent elements of the prior art are given the same numerals as those in Fig. 2 and are not specifically described. Numeral 2 is an added phase control loop, which we call "a second phase control loop", while the phase control loop 1 "a first phase control loop." Numeral 92 is a timing control unit, and 53 is a decoding unit. A third memory unit 33 and its changeover switches 45, 46 are added.

The operation of thus composed signal processing apparatus of this invention will be explained below. In the first place, from an input TC signal entering from an input terminal 71 only a synchronous signal is picked up by a synchronous separating unit 7, and it is applied to the first phase control loop 1 to be multiplied. Same as in the prior art, when the sample clock frequencies of Y signal and TC signal are respectively $m \cdot a \cdot f_H$ and $n \cdot a \cdot f_H$, the output frequency of the first VCO 13 is different from the conventional example and is $n \cdot a \cdot f_H$, which is the sample clock frequency of the TC signal and a write address 511 is generated by write counter 51. The first phase control loop 1 determines the constant of the first LPF 12 so that the output frequency of the first VCO 13 may promptly follow the jitter of the input synchronous signal.

On the other hand, the synchronous signal is also fed into the second phase control loop 2, and the output frequency of the second VCO 23 becomes a reading clock signal $m \cdot a \cdot f_H$ for Y signal, and a read address 521 is generated by read counter 52. This read counter 52 also serves as the frequency divider of the second phase control loop 2. The constant of the second LPF 22 is determined so that the action of the second phase control loop 2 may not respond to the jitter of the input synchronous signal but follow the frequency deviation or drift. As a result, the cutoff frequency of the first LPF 12 becomes higher than that of the second LPF 22. And by applying phase control with the output of decoding unit 53 for detecting a specified address from the read address 521, a phase difference is created between the input signal and output signal to make wider the allowance for the jitter width.

A timing control unit 92 controls changeover switches 41, 42, 43, 44, 45, 46 so as to sequentially select the memory units to be written and the memory units to be read.

When the changeover switches 41, 42, 43, 44, 45, 46 are in the state as shown in Fig. 4, the input signal is written into the first memory unit 31, and the output signal is read out from the second memory 32. At every synchronous signal of the input signal, the changeover switches 41, 43, 45 are sequentially changed over, and at every synchronous signal of the output signal, the changeover switches 42, 44, 46 are sequentially changed over.

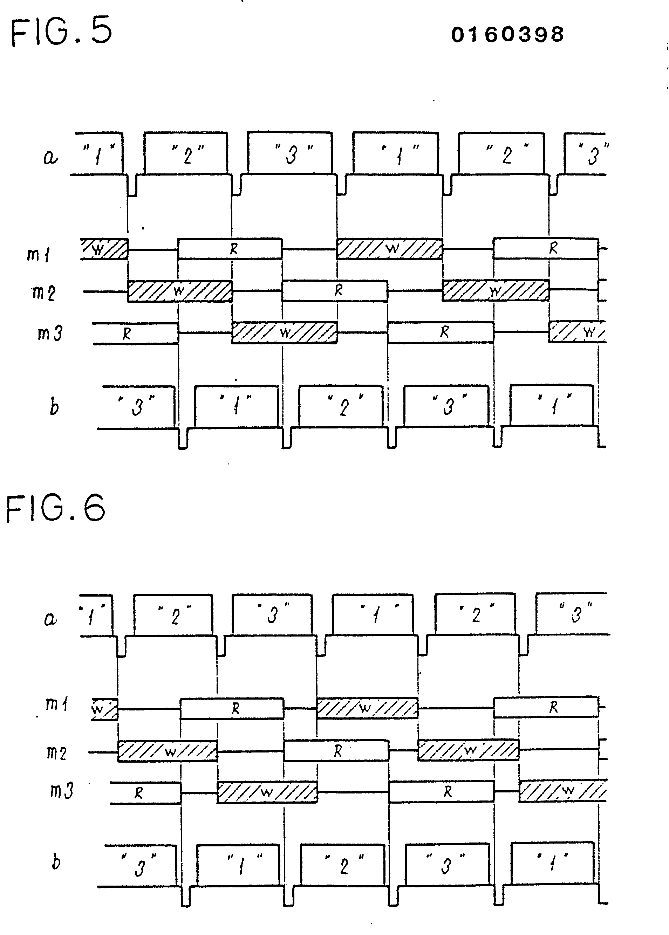

This operation is further described below in conjunction with Fig. 5 and Fig. 6, which show the timing of Fig. 4. In these charts, curve a refers to the input TC signal, and attached numerals ("1", "2", "3") represent the memory units into which the signal is written; m1, m2, m3 respectively show the write (W) and read (R) actions of the first, second and third memory units. Curve b is the R-Y, B-Y or Y

0160398

signal, and attached numerals ("1", "2", "3") represent the memory units from which the signal is read out.

Fig. 5 refers to a stationary state, in which writing-into and reading-out timings of the memory units are synchronized with the input signal, and the first phase control loop 1 is matched with the phase of the input signal, while the second phase control loop 2 is synchronized at a specified phase difference from the input signal.

Fig. 6 shows a state of the input signal containing jitter, specifically indicating the moment when the input signal drifts in the shortening direction of . the period of synchronous signal. At this time, the first phase control loop 1 immediately follows up the input signal, but the second phase control loop 2 does not. Therefore, the writing and reading timings are deviated from each other. As apparent from this illustration, the input side jitter component does not appear in the output signal. Further, since the second phase control loop 2 later follows up the input signal, the state in Fig. 6 does not last long, and soon returns to the stationary state as shown in Fig. 5.

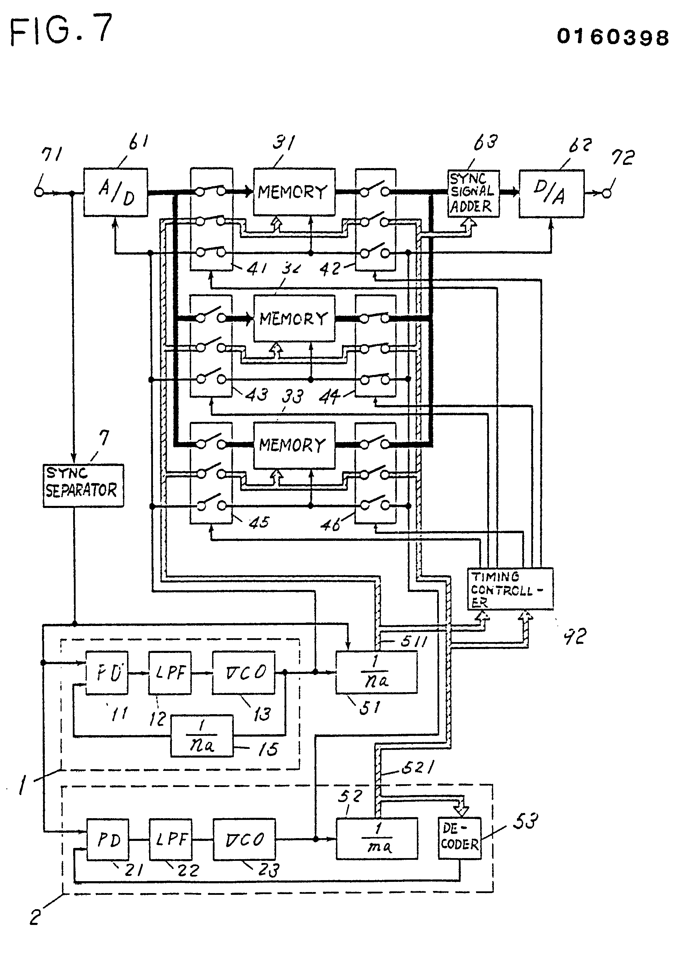

Fig. 7 shows to a second embodiment, of which structure is similar to Fig. 4 except that a synchronous signal adding unit 63 is provided.     The timing control unit 92 controls the changeover switches 41, 42, 43, 44, 45, 46 so as to sequentially change over the memory units to be written and the memory units to be read, and at the same time detects a  specified period  of output signal from the read address 521 and reads out only that portion from the memory unit, while the other portion is  added  with synchronous signal or the like in the synchronous signal adding unit 63.

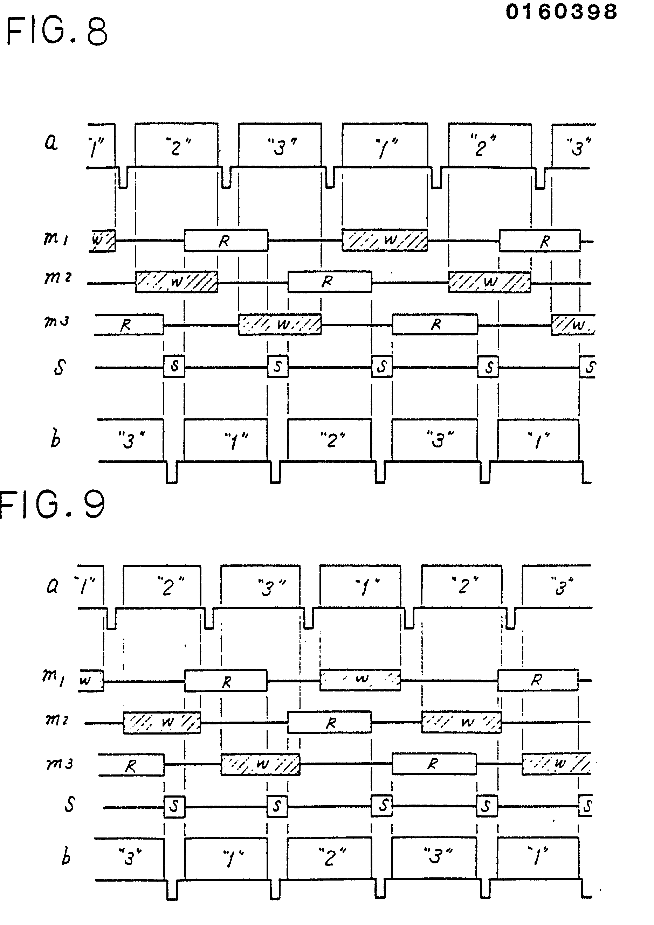

Fig. 8 shows a stationary state, in which the time when the memory units are neither writing nor reading is longer than that in Fig. 5. That is, the larger allowance  for jitter is one of the features of the second embodiment.

Fig. 9 indicates a state when the input signal is containing jitter, representing specifically the moment the input signal drifts in the shortening direction of period of synchronous signal.

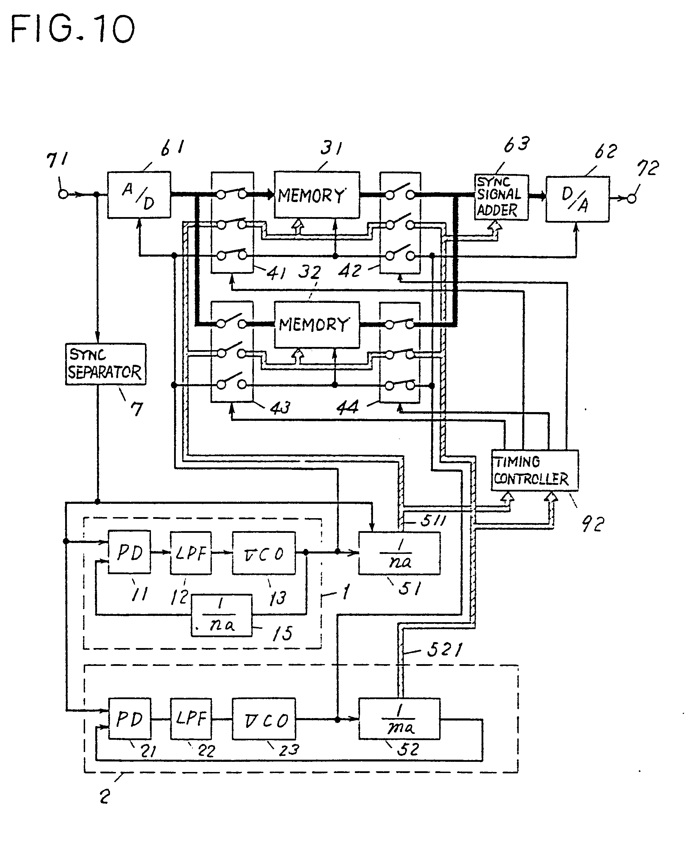

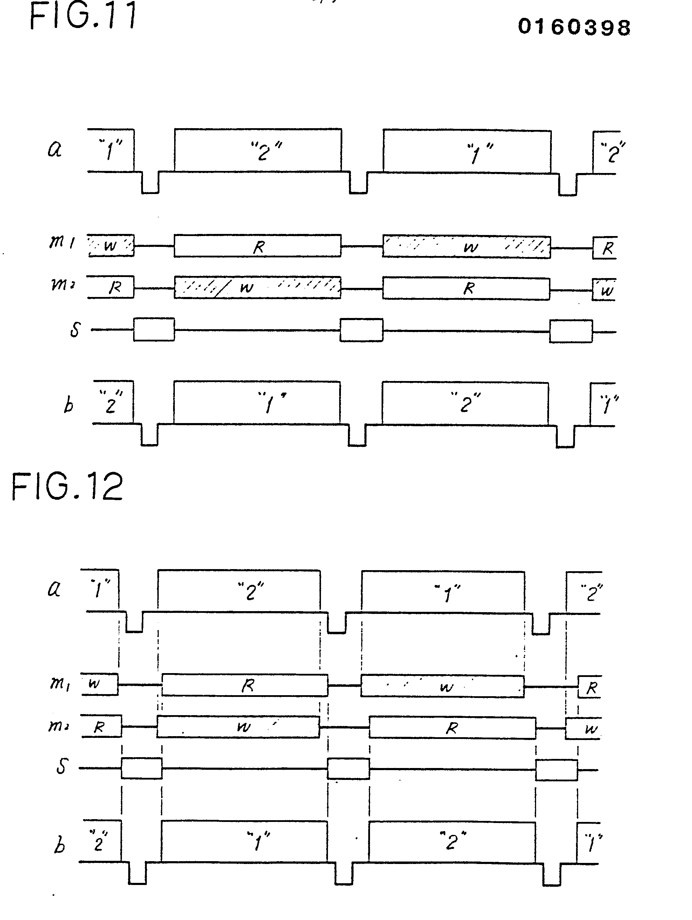

Fig. 10 shows a third embodiment.  It is the same as the embodiment in Fig. 7  except that only two     memory units are provided.     Fig. 11 and Fig. 12 are timing charts of Fig. 10, corresponding to Fig. 8 and Fig. 9, respectively.  That is, Fig. 11 is a stationary state, and Fig. 12 shows a state when the input signal is containing jitter, demonstratin

the moment the input signal drifts in the shortening direction of period of synchronous signal. Since the output signal is read out only in a specified period, an allowance is provided between the writing and reading timings of the two memory units, and the same operation as in the apparatus comprising three or more memory units can be achieved with respect to signals small in jitter width. Accordingly, by the construction having only two memory units, any jitter component of input signal does not appear in the output signal.

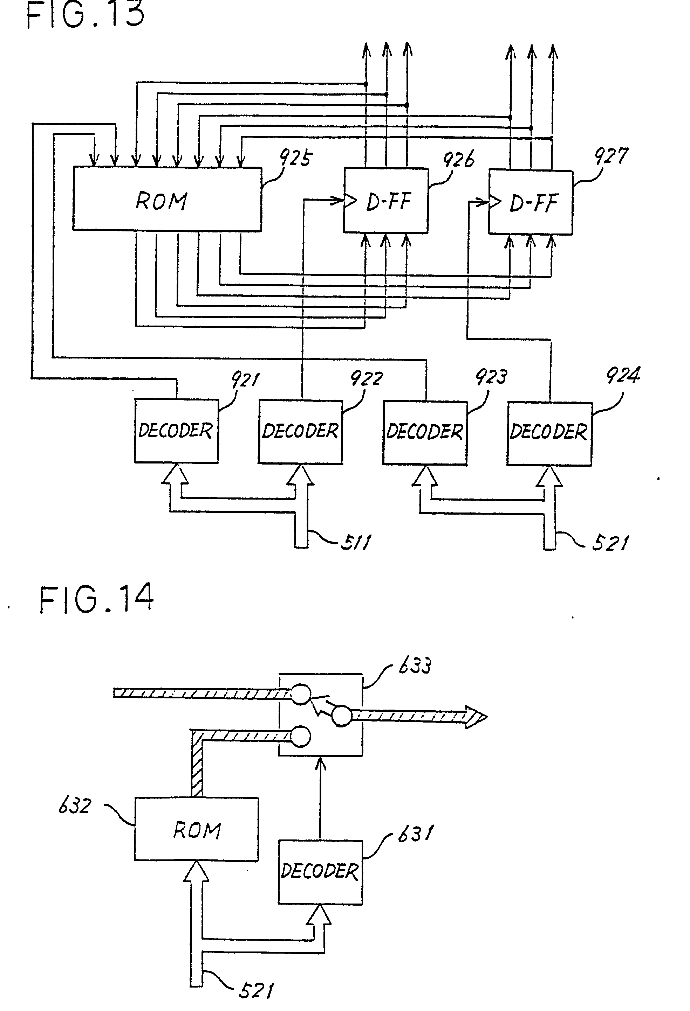

The timing control unit 92 used in the above embodiments may be easily realized by a known digital circuit techniques. To make the understanding easier, an example of its composition is shown in Fig. 13, in which the output of ROM 925 is fed into D flip-flops 926, 927, and the outputs of D flip-flops 926, 927 are fed back to the input of ROM 925. The timing pulse to change over the memory unit to write in is obtained by decoding the write address 511 by decoder 922, and is used as a clock pulse of D flip-flop 926. Similarly, the timing pulse to change over the memory unit to read out of is obtained by decoding the read address 521 by decoder 924, and is used as a clock pulse of D flip-flop 927. A signal showing the specified period shorter

- 15 -

0160398

than the period of horizontal synchronous signal is obtained by decoding the write address 511 by decoder 521 at the write side, and by decoding the read address 521 by decoder 923 at the read side, and the both signals are used as the inputs to the ROM 925. By thus making up, the input of the ROM 925 represents the states of D flip-flops 926, 927 and each specified time interval, and by setting the internal data in the state to be taken by the D flip-flops 926, 927 by the changeover pulse of next memory unit, memory units can be changed over sequentially. In the embodiment in Fig. 4, it may be easily understood that the decoding of the specified period     is not necessary.

The synchronous signal adding unit 63 used in the above embodiment may also be realized easily  by  a known digital techniques, and an example of its composition is shown in Fig. 14. While reading out from any one of memory units 31, 32, 33, the read address 521 is decoded by decoder 631, and changeover switch 633 is set in the state as shown in the drawing. Otherwise, that is, while any memory unit is not being read out, the switch 633 is changed over to the output side of the ROM 632 in which the data corresponding to synchronous signal is stored. In this way, a synchronous signal may be added to the signal being read out of the memory unit.

Several embodiments are exhibited hereabove, and they are intended to help understand this invention more easily, and this invention is not limited to these embodiments alone, and, not to mention, various modified versions are possible within the .scope of this invention.

0160398

- 17 -

CLAIMS:

1.    A signal processing apparatus comprising:
       a plurality of memory means (31,32,33) for temporarily
storing an input signal;
       a synchronous signal separating means (7) for
separating a synchronous signal from said input signal;
       a first phase control loop (1) for producing a
writing clock signal for writing said input signal into
said memory means (31,32,33);
       a second phase control loop (2) for producing a
reading clock signal for reading the written input signal
out of said memory means (31,32,33); and
       control means (92) for controlling writing and
reading timings of said memory means;
       wherein said reading clock signal is not synchronised
with said writing clock signal, whereby a fluctuation of
said input signal does not appear in the signal read out
of said memory means.

2.    A signal processing apparatus according to claim 1,
wherein the cutoff frequency of a low-pass filter (12)
contained in the first phase control loop (1) is set
higher than the cutoff frequency of a low-pass filter
(22) contained in the second phase control loop (2).

3.    A signal processing apparatus according to claim 1
or 2, further comprising a synchronous signal adding means
(63) provided at the output side of said memory means
(31,32,33) and writing in and reading out of said memory
means are effected only in a specified time shorter than
the period of synchronous signal.

4.    A signal processing apparatus according to any one
of the preceding claims and comprising: an analog-digital
converter (61) for converting an input analog signal into
a digital signal; and a digital-analog converter (62)

for converting the output of said memory means (31,32,33) into an analog signal.

5.    A signal processing apparatus according to any one of the preceding claims, wherein said timing control means (92) controls writing in by sequentially changing said memory means (31,32,33) to write in with said writing clock signal at every period of said synchronous signal, and reading out by sequentially changing said memory means (31,32,33) to read out with said reading clock signal at every period of said synchronous signal.

FIG.1

# FIG. 2

0160398

# FIG. 3

# FIG.4

FIG.5

0160398

FIG.6

# FIG. 7

0160398

0160398

## FIG. 8

## FIG. 9

# FIG.10

# FIG.11

0160398

# FIG.12

## FIG.13

ROM 925

D-FF 926

D-FF 927

DECODER 921

DECODER 922

DECODER 923

DECODER 924

511

521

## FIG.14

633

632 ROM

631 DECODER

521